# EUROPEAN PATENT APPLICATION

(11) **EP 4 625 732 A1**
(43) Date of publication of application: **01.10.2025**
(21) Application number: 25162441.7
(22) Date of filing: 07.03.2025
(51) Int. Cl.: H02G 3/22

(54) **CABLE FAIRLEAD SYSTEM WITH ENHANCED STIFFNESS/TIGHTNESS**

(30) Priority: 28.03.2024 EP 24167230
(71) Applicant: HellermannTyton GmbH & Co. KG, 25436 Tornesch (DE)
(72) Inventor: Schiwek, Björn, 25436 Tornesch (DE)
(74) Representative: Hernandez, Yorck

(57) **Abstract**

The disclosure relates to a cable fairlead system (1) for passing at least one cable in a pass-through direction transverse to a main extension plane of the Cable fairlead system (1), comprising a frame unit (2) with a first frame element (2a) and a second frame element (2b), the frame elements (2a, 2b) being made with a hard component; and a number of grommet elements (3a, 3a', 3b, 3b') being made with a soft component, the soft component of the grommet elements (3a, 3a', 3b, 3b') being soft as compared to the hard component of the frame elements (2a, 2b), where at least one of the grommet elements (3a, 3a', 3b, 3b') has at least one cable-feedthrough (4) for passing one respective cable of the at least one cable; where the first frame element (2a) and second frame element (2b) delimit at least one through-opening (2c, 2c*) in which the grommet elements (3a, 3a', 3b, 3b') are arranged by means of a form-fit connection; with first-type tongue-and-groove connection elements (5a, 5a*, 6a, 6a*) extending along two neighboring inner sides (2a-L1, 2a-L2, 2a-B1, 2a-B2) of the through-opening (2c, 2c*) and along two neighboring outer sides (3a-U, 3a-R) of the grommet elements (3a, 3a', 3b, 3b'); and with second-type tongue-and-groove connection elements (5b, 5b*, 6b, 6b*) extending along two other neighboring inner sides (2a-R1, 2a-R2, 2b-U) of the through-opening (2c, 2c*) an along two other neighboring outer sides (3a-L, 3a-B) of the grommet elements (3a, 3a', 3b, 3b'); where first-type and second-type tongue-and-groove connection elements (5a, 5a*, 5b, 5b*, 6a, 6a*, 6b, 6b*) are fit to one another to form the form-fit connection (5, 6) with respect to the pass-through direction; and where on the inner sides of the through-opening (2c, 2c*) and on the outer sides of the grommet elements (3a, 3a', 3b, 3b') two tongue-and-groove connection elements (5a, 5a*, 5b, 5b*, 6a, 6a*, 6b, 6b*) are arranged in two different planes extending along the main extension plane in order to provide a more reliable cable fairlead system (1).

## Description

### Field of the invention

The disclosure relates to a cable fairlead system for passing at least one cable in a pass-through direction perpendicular to a main extension plane of the cable fairlead system, comprising a frame unit with a first frame element and a second frame element, the frame elements being made with a hard component; and a number of grommet elements being made with a soft component, the soft component of the grommet elements being soft as compared to the hard component of the frame elements, where each of the grommet elements has at least one cable-feedthrough for passing one respective cable of the at least one cable; where the first frame element and second frame element delimit at least one through-opening in which the grommet elements are arranged by means of a form-fit connection.

### Background

Cable fairlead systems or cable entry systems are used for cable installation in many machines, in particular enclosure housings and control cabinets of all kinds. These systems save time and space for providing a reliable and often watertight inlet for cables providing electric current or data current.

For instance, DE 10 2020 126 444 A1 discloses a cable fairlead system with a frame unit and several grommet elements or modules provided with a passage opening for a respective cable. The external dimensions of the grommet elements are adapted to the internal cross-section of the frame unit and the grommet elements can be arranged in the internal cross-section of the base frame. The frame unit comprises a first frame element and a second frame element which can be fixed thereto, wherein the first frame element has a U-profile and the second frame element can be fixed to the free ends of the U-legs of the first frame element. The invention provides for a mounting aid to be associated with the frame unit, which mounting aid comprises a mounting bar, the end face of which can be detachably fastened to the inside of the first frame element in order to be able to insert and hold a cable feed-through/grommet module between a U-leg of the first frame element and the mounting bar, and which has a gripping section adjoining the mounting web, which is designed for gripping the mounting aid after the grommet module has been inserted, in order to be able to pull it out of the first frame unit after the cable entry module has been inserted. The invention further relates to a method for mounting grommet elements on the frame unit of such a grommet elements by means of such a mounting aid.

Further such systems are known from EP 3 906 600 A1, EP 3 921 906 A1, EP 3 791 454 A1, EP 3 545 595 A1, EP 2 323 236 A2, and EP 2 614 564 B1, for instance, all of which share the common setup of a standard frame unit with different sets of inserts which can be adapted to the number and diameter of the respective cables that need to be passed and guided into the housing at hand.

The solution of DE 10 2020 126 444 A1 further provides a grommet elements with respective extensions on a back side that is oriented towards the inner part of the machine/housing during intended use. This extension serves as strain relief for a cable accommodated in the feedthrough of the respective grommet element.

However, extended application of this approach has shown that during intended use in many settings, the known solution is deformed due to physical stress and ultimately fails in providing sufficient water-/dust tightness as well as strain relief.

The technical task, therefore, is to provide a more reliable cable fairlead system, in particular a more stable and/or tighter cable fairlead system.

### Overview

This task is solved by the objects of the independent claims. Advantageous embodiments are apparent from the dependent claims, the description and the figures.

One aspect relates to a cable fairlead system for passing at least one cable, i.e. one or more cables, in a pass-through direction at least essentially perpendicular to a main extension plane of the cable fairlead system, thereby also guiding the respective cables.

The cable fairlead system comprises a frame unit with a first frame element and a second frame element, the frame elements being made with or from a relatively hard component, and a number of grommet elements being made with or from a relatively soft component, the soft component of the grommet elements being soft as compared to the hard component of the frame elements. Both frame elements and grommet elements may be injection-molded with or from plastic. The hard component may be PA66GF and/or PA6GF, for instance (generally speaking, a polyamide matrix with a stiffening, harder, relaxation-inhibiting glass fiber filling) . The soft component may be rubber and/or a thermoplastic elastomer, for instance. The proposed system could also be described as modular fairlead system, where different sets of grommet elements (modules of different types) can be combined with a standard (single-type) frame unit.

At least one, preferably several or all, of the grommet elements has/have at least one cable-feedthrough for passing one respective cable of the at least one cable. The cable feed-through may be round and/or may be accessed by a cable via an opening in form of a slit from the feed-through to an outer side of the respective grommet element. A diameter of the cable feed-through may be adapted to a specific cable diameter and configured to provide water-/dust-tight passing for a cable with the specified cable diameter. The feed-through diameter may be slightly smaller than the cable diameter, such that the feed-through is water-/ dust-tight when the cable is inserted and the grommet element is pressed onto the cable when the frame unit is closed, i.e. complete. This may also be referred to as oversized grommet element, compare below. Alternatively, one or several of the grommet elements may be configured as blind cover, i.e. configured to fill (with the one or more other grommet elements) the through-opening of the frame unit described in the following paragraph without providing a cable-feedthrough at the position of the blind cover gromme element in the through-opening.

The first frame element and second frame element are configured to delimit at least one through-opening of the frame unit in which the grommet elements are arranged by means of a form-fit connection when the system is in use, i.e. assembled and/or installed. Thus, the through-opening may also be referred to as receiving opening for the grommet elements. The through-opening preferably has parallel inner sides, i.e. sides that are oriented towards a center of the respective through-opening. Thus, the through-opening may be a rhomboid through-opening, in particular a rectangular through-opening. The frame elements may be screwed to one another, for instance. In particular, in order to provide the one or more (preferrably rectangular) through-openings, the first frame element may act as a frame primitive or bottom part and comprise one or more U-profiles (with shared U-legs in case of more U-profiles); the second frame element may act as a frame lid or top part and be fixed to the free ends of the U-legs of the first frame element, preferably by screws. Alternatively, both frame elements may be L-shaped, i.e. each of the frame elements forming at least essentially two sides of the (preferrably rectangular) through-opening. In particular, the frame elements may be identical (in construction). Such a design is rendered possible by the tongue-and-groove connections described below, since these connections provide the mechanical interaction strength between the grommet elements that is required to refrain from the U-shaped design known from the state of the art during assembly of the system.

In this system, respective first-type tongue-and-groove connection elements that extend along two neighboring inner sides of the (preferrably rectangular) through-opening (sides that run at least essentially perpendicular to one another, separated by only one edge) are provide on the frame unit and further respective first-type tongue-and-groove connection elements that extend along two neighboring outer sides of the grommet elements (sides that run at least essentially perpendicular to one another, separated by only one edge) are provided on the respective grommet elements. Also, respective second-type tongue-and-groove connection elements that extend along two other neighboring inner sides of the (preferrably rectangular) through-opening (sides that also run at least essentially perpendicular to one another, separated by only one edge) are provide on the frame unit and further respective second-type tongue-and-groove connection elements that extend along two other neighboring outer sides of the grommet elements (sides that also run at least essentially perpendicular to one another, separated by only one edge) are provided on the respective grommet elements. Thus, a circumferential engagement of nearest neighboring grommet and/or frame elements into each other can be achieved. One grommet and/or frame element already in its position may then also function as an insertion aid for the one or more nearest neighboring grommet elements already in position, the newly positioned grommet element gliding along the nearest neighboring grommet and/or frame elements already in position.

First-type and second-type tongue-and-groove connection elements are fit to one another to form the form-fit connection with respect to the pass-through direction. When the grommet elements are placed in the (preferrably rectangular) through-opening of the frame unit, the first-type tongue-and-groove connection elements of the frame unit engage with the second-type tongue-and-groove connection elements of the respective grommet elements, and/or the the second-type tongue-and-groove connection elements of the frame unit engage with the first-type tongue-and-groove connection elements of the respective grommet elements, depending on the position of the respective grommet element in the (preferrably rectangular) through-opening, i.e. depending on which inner side of the frame unit it is arranged. When grommet elements are arranged adjoining to one or more other grommet elements, the respective tongue-and-groove connection elements interact accordingly, mutatis mutandis.

As a consequence, the tongue-and-groove connection elements hinder movement of the grommet elements in a direction along the pass-through direction relatively to the frame unit and/or the other grommet elements they are engaged with by said first- and second type tongue-and-groove connection elements. On the inner sides of the (preferrably rectangular) through-opening and on the outer sides of the grommet elements, respectively, two tongue-and-groove connection elements are arranged in two different planes extending along the main extension plane.

Thus, there is a first tongue-and-groove connection which is arranged in a first plane extending along the main extension plane and a second tongue-and-groove connection which is arranged in a second plane extending along the main extension plane, with the second plane differing from the first plane. Preferably, the planes of the tongue-and-groove connections are arranged such that a central plane that also extends along the main extension plane is located in between them. Since the central plane is located in the middle of the grommet elements, i.e. at the same distance from an inwardly oriented outer surface of the grommet element (facing an inner space of the housing to be sealed during intended use) and from an outwardly oriented outer surface of the grommet element (facing an environment during intended use), one tongue-and-groove connection can be considered an inner tongue-and-groove connection, and the other tongue-and-groove connection an outer tongue-and-groove connection. Preferably, the distance from each of the planes of the tongue-and-groove connections from the central plane is equal to or larger than the distance from each of the planes of the tongue-and-groove connections from the respective nearest (inwardly or outwardly orientated) outer surface of the grommet element. As a consequence, when during intended use a cable is pulled from the outside, a gap may occur between grommet element and neighboring grommet/frame element at the outer tongue-and-groove connection due to loosening forces running perpendicular to the pull. At the same time, though, grommet element and neighboring grommet/frame element at the inner tongue-and-groove connection are pressed against each other due to tightening forces. Taken together, the set of two tongue-and-groove connections leads to an even improved water-/dust-tightening when pull or push forces are applied to the cables running through the proposed cable fairlead system.

Each of the two different tongue-and-groove connections comprises both first-type and second-type tongue-and-groove connection elements, depending on which side of the respective elements (frame elements/grommet elements) it is located. Preferably, the tongue-and-groove connection elements of both tongue-and-groove connection located on one side, i.e. on identical sides (inner sides of the (preferrably rectangular) through-opening and on the outer sides of the grommet elements) are of the same type (e.g. a first-type tongue-and-groove connection element of the first tongue-and-groove connection extending along a first type tongue-and-groove connection element of the second tongue-and-groove connection on the same side). However, they can also be mixed (e.g. a first-type tongue-and-groove connection element of the first tongue-and-groove connection extending along a second type tongue-and-groove connection element of the second tongue-and-groove connection). This gives the advantage that the different sides of the parts are easier to distinguish, allowing a faster mounting of the grommet element with improved failsafe-protection, i.e. effectively a more reliable cable fairlead system.

The described approach gives the advantage that an area of mechanical interaction of the different elements with one another (i.e. frame elements with grommet elements and grommet elements with grommet elements) is increased, which results at higher interaction forces. At the same time, the described "double tongue-and-groove connection" predefines an orientation of the grommet elements in the (preferrably rectangular) through-opening, effectively resulting in a poka joke effect by reducing the number of possible placements of the grommet elements (making misplacements more obvious/impossible) with identical shapes of the grommet elements on their outer sides (i.e. a modular design where each grommet element may be placed at any position in the (preferrably rectangular) through-opening with the same level of stiffness/tightness provided). As a result, the reliability of the cable fairlead system is improved. Even dust-/water-tightness according to the IP6X-category (as defined in ISO 20653 at the time of filing this application) may be achieved. Furthermore, as compared to many known approaches, the system complexity is reduced, since the mechanical interaction with the grommet element is the same for grommet and frame elements, due to the identical interaction geometry (of the tongue-and-groove connection). The tongue-and-groove connections not only fix the grommet elements on frame unit and other grommet elements (thus increasing stiffness), but also provide guidance for the grommet elements while inserted without temporarily added assembly aids that have to be removed afterwards (as known from the state of the art).

In one embodiment, it is provided that the first-type tongue-and-groove connection elements are tongue-type tongue-and-groove connection elements and the second-type tongue-and-groove connection elements are groove-type tongue-and-groove connection elements. Also, advantageously, three of four inner sides of the respective (preferrably rectangular) through-opening(s) (bottom side and leg sides) are at least mainly formed by the first frame element (frame primitive), and one of the four inner sides of the (preferrably rectangular) through-opening (top side) is formed at least mainly by the second frame element (frame lid). Then, it is preferred that the bottom inner side, which is at least mainly formed by the first frame element opposite to the upper inner side, which is at least mainly formed by the second frame element, has a first-type tongue-and-groove connection element. This gives the advantage of an improved reliability, since inserting of tongue of a soft material into a groove of hard material is specifically prone to error, in particular if the soft material (the grommet element) is oversized, as described below, and if the soft tongue is located in a restricted space where it cannot be moved sidewards, as at the bottom of a U-shape, for instance.

Preferably, the tongue-and-groove connection elements are rounded connection elements. Thus, in a cross-section perpendicular to the course of the respective connection elements along the assigned sides, respective side and bottom/top walls merge into each other without a sharp edge, which sharp edge corresponds to a radius of curvature of essentially zero. The side walls of the connection elements may merge into the top (for tongue-type tongue-and-groove connection element) and bottom (for groove-type tongue-and-groove connection elements) wall at least essentially with a radius of curvature of at least 25%, preferably at least 33%, more preferably at least 45%, of a thickness of the respective connection element. Said thickness may be measured in the pass-through direction, in particular between two at least essentially parallel parts of the respective side walls of the respective connection element. Correspondingly, the side walls of the respective connection element may merge into the outer side of the respective grommet element rounded, i.e. at least essentially following a further radius of curvature different from essentially zero. Preferably, said further radius of curvature ("side-side-radius") is smaller than the one radius of curvature from above ("side-top/bottom-radius"). The further radius of curvature may be at least 15% of the thickness of the respective connection element and/or at most 30% of the thickness of the respective connection element. All the rounded connection elements of one type may have the identical cross-sectional shape. The rounded connection elements, in particular with the radiuses of curvature as specified, are particularly advantageous in case of external pushing/pulling forces even only roughly along the pass-through direction. Namely, in contrast to a rectangular cross-section, the rounded shape ensures a concisely defined continuous sealing line also when the grommet element is pulled/pushed with a force component across the pass-through direction, and/or when the grommet element is tilted.

In a further embodiment, it is provided that the tongue-and-groove connection elements are continuous connection elements extending along the respective sides continuously from one edge of the respective side to an opposite edge, i.e. without interruption. This gives the advantage of a particular stable and tight interaction between adjacent elements (be it between different grommet elements or between grommet element and frame element).

In another embodiment, it is provided that the tongue-and-groove connection elements of one type transition seamlessly into the tongue-and-groove connection elements of the other type at edges between the different sides. Thus, the tongue-and-groove connection elements of same and different types are arranged in the same plane and abut against each other. This too gives the advantage of a particular stable and tight interaction between adjacent elements.

In a further embodiment, it is provided that the tongue-and-groove connection elements are undercut-free connection elements. In particular, in a cross-section perpendicular to their respective course and, as a consequence, parallel to the pass-through direction, tongue-type tongue-and-groove connection elements have flanks that are parallel to each other or approach each other with increasing distance from the rest of the respective element. Correspondingly, in this case, groove-type tongue-and-groove connection elements have flanks that are parallel to each other or are further apart from each other with increasing distance from a center of the respective element. This makes the different elements easier to produce, e.g. via injection-molding, and hinders faulty assembly of the elements. Thus, also this gives the advantage of an improved reliability with a particular stable and tight interaction between adjacent elements.

In another embodiment, it is provided that the grommet elements are oversized such that they are/have to be deformed when the (preferrably rectangular) through-opening is filled with them. For instance, they can be oversized by at least 0,25%, in particular at least 0,4%, and/or less than 1%, in particular less than 0,75% or less than 0,6%. This increases the force by which the different adjacent elements are pressed to one another and thus improves tightness and stability, ultimately leading to an increased reliability.

In a further embodiment, it is provided that the side lengths of the (preferrably rectangular) through-opening are an integer multiple of a base measure and that the grommet elements have, in an orthogonal projection onto the main extension plane (with tongue-and-groove connection elements not considered) a quadratic base area, with a side length of the quadratic base area being an integer multiple of the base measure. In case however if, for example, the grommet elements are oversized by e.g. about 0,5%, the side length of the quadratic base would be an 1.01-multiple of the base measure. This gives the advantage of a particularly versatile cable fairlead system, which can flexibly be adapted to different needs and still be of improved reliability.

In another embodiment, it is provided that at least two grommet elements are adjacent, with their sides, to at least two other grommet elements, in particular adjacent to three other grommet elements. This gives the advantage that the improvement in stability and tightness is particularly high as compared to the known approaches.

In a further embodiment, it is provided that the frame unit comprises a sealing contour running circumferentially around the (preferrably rectangular) through-opening on an outer side of the frame unit, said outer side extending along the main extension plane of the frame unit. This gives the advantage that not only the cable fairlead system itself is dust-/watertight, but that also a dust-/watertight sealing between cable fairlead system and machine/housing can be achieved.

In another embodiment, it is provided that at least one of the grommet elements comprises a strain relief element on an outer side of the grommet element, said outer side extending along the main extension plane of the frame unit. In particular, the outer side of the grommet element is orientated as the outer side of the frame unit comprising the sealing contour. This gives the advantage that the improved stability and tightness can be taken advantage of in a particularly useful way.

Further aspects relate to a frame unit or to a first frame element or to a second frame element or to one or more grommet elements or for a cable fairlead system as described above. In particular, one aspect relates to a set of such grommet elements, with different types of grommet elements, where the different types differ in the respective number of cable-feedthroughs and/or in the respective size. In particular grommet elements of a smaller type may have an outer-side length which is half of an outer-side length of grommet elements of a bigger type. This implements a specifically reliable modular cable fairlead system.

Advantages and advantageous embodiments of the latter aspects correspond to the advantages and advantageous embodiments described for the former aspect, and vice versa.

The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

In the context of the present disclosure, "transverse/along" may be understood as "at least substantially vertical/parallel", i.e. "vertical/parallel" or "substantially vertical/parallel", i.e. vertical/parallel except for a predetermined deviation. The predetermined deviation can, for example, be at most 15°, preferably at most 5°, particularly preferably at most 3°. Accordingly, "oppositely oriented" may be understood in the context of the present disclosure as "at least substantially oppositely oriented" i.e. "at least substantially antiparallel oriented". The limitation "substantially" may also refer to a percentage predetermined maximum permissible deviation, for example at most 15%, preferably at most 5%, particularly preferably at most 3%.

### Detailed description

Exemplary embodiments are described in more detail below with reference to schematic drawings. Therein,
- Fig. 1: shows a perspective view on an exemplary embodiment of a cable fairlead system;
- Fig. 2: an exemplary embodiment of a second frame element of the frame unit of Fig. 1;
- Fig. 3: the embodiment of Fig. 1 in a partly disassembled state;
- Fig. 4: an exemplary embodiment of a grommet element;
- Fig. 5: another exemplary embodiment of a grommet element;
- Fig. 6: an exemplary embodiment of a first frame element of the frame unit of Fig. 1;
- Fig. 7: a back view on the embodiment of Fig. 1;
- Fig. 8: a sectional view on the embodiment of Fig. 7, along axis A-A
- Fig. 9: a sectional view on the embodiment of Fig. 7, along axis B-B; and
- Fig. 10: a sectional view on an embodiment in a stress situation.

In the figures, the same or functionally identical features are provided with the same reference signs.

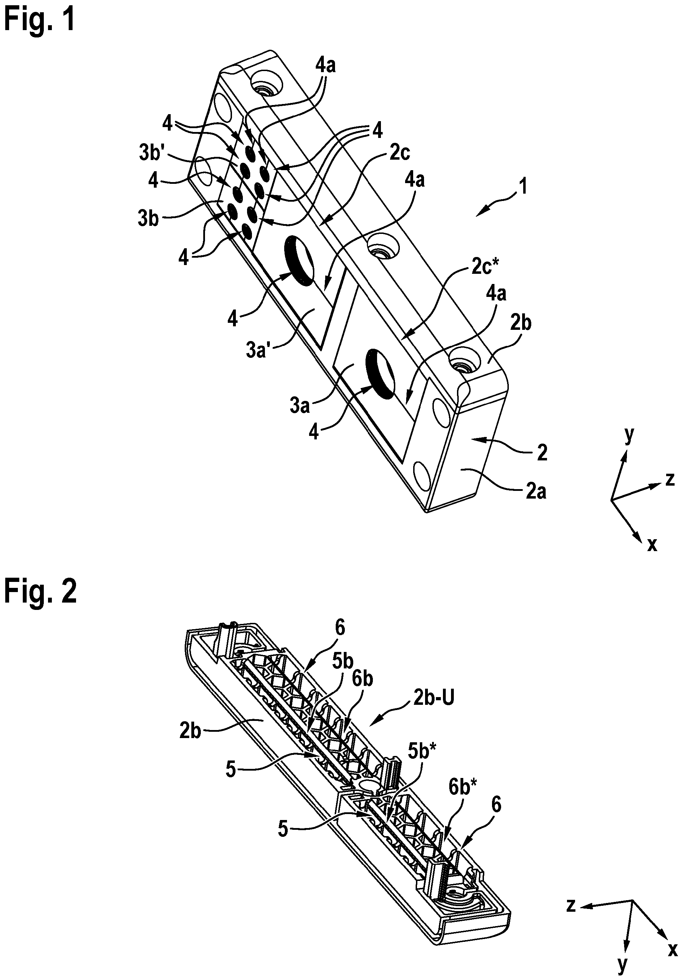

Figure 1 shows a perspective view on an exemplary embodiment of a cable fairlead system. The cable fairlead system 1 is configured for passing at least one cable (not shown) in a pass-through direction (+/-z direction here) perpendicular to a main extension plane (x-y-plane here). The cable fairlead system 1 comprises a frame unit 2 with a first frame element 2a and a second frame element 2b, the frame elements 2a, 2b being made with a hard component. The cable fairlead system 1 also comprises a number of grommet elements 3a, 3a', 3b, 3b' being made with a soft component, the soft component of the grommet elements 3a, 3a', 3b, 3b' being soft as compared to the hard component of the frame elements 2a, 2b. Each of the grommet elements 3a, 3a', 3b, 3b' has at least one cable-feedthrough 4 for passing one respective cable. Associated with the cable-feedthroughs 4 are respective slits 4a that connect the respective cable-feedthrough 4 to the environment, such that the cable can be inserted into the cable-feedthrough 4 via the slit 4a.

The first frame element 2a and the second frame element 2b delimit at least one (here two), in this case rectangular through-opening 2c, 2c' in which the grommet elements 3a, 3a', 3b, 3b' are arranged by means of a form-fit connection (as explained in the following).

In Fig. 2, the second frame element 2b of Fig. 1 is shown in a removed state, with its inner side 2b' (which is the top side of the rectangular through-openings 2c, 2c') exposed. Extending along inner side 2b-U, i.e. along the x-direction here, are both second-type tongue-and-groove connection elements 5b, 5b* of a first tongue-and-groove connection 5 and second-type tongue-and-groove connection elements 6b, 6b* of a second tongue-and-groove connection 6. The second-type tongue-and-groove connection elements 5b, 5b*, 6b, 6b* are groove-type tongue-and-groove connection elements in this example.

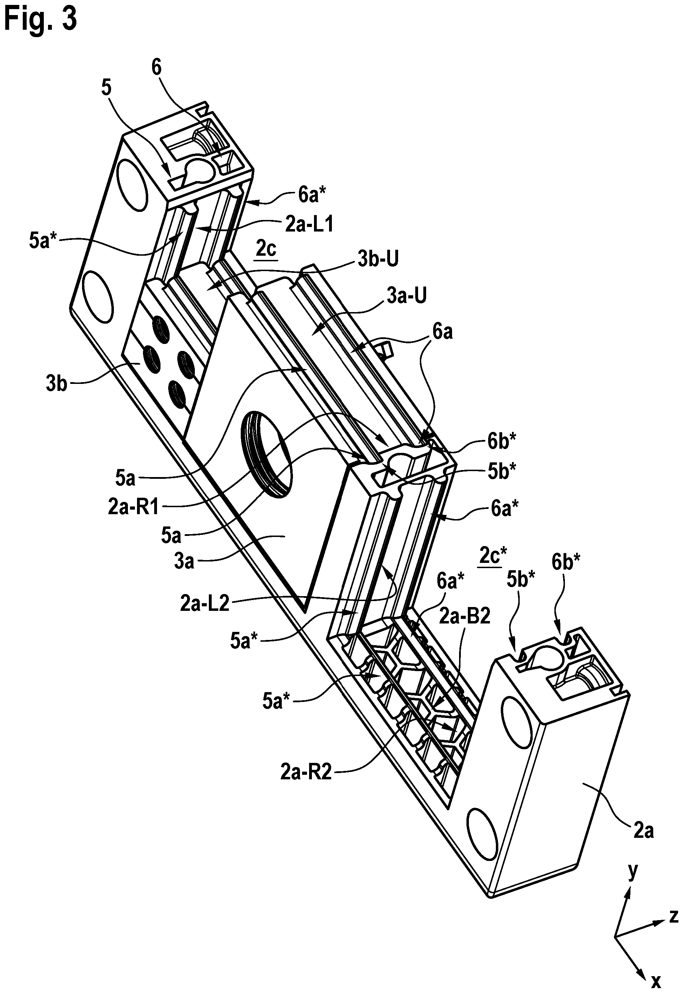

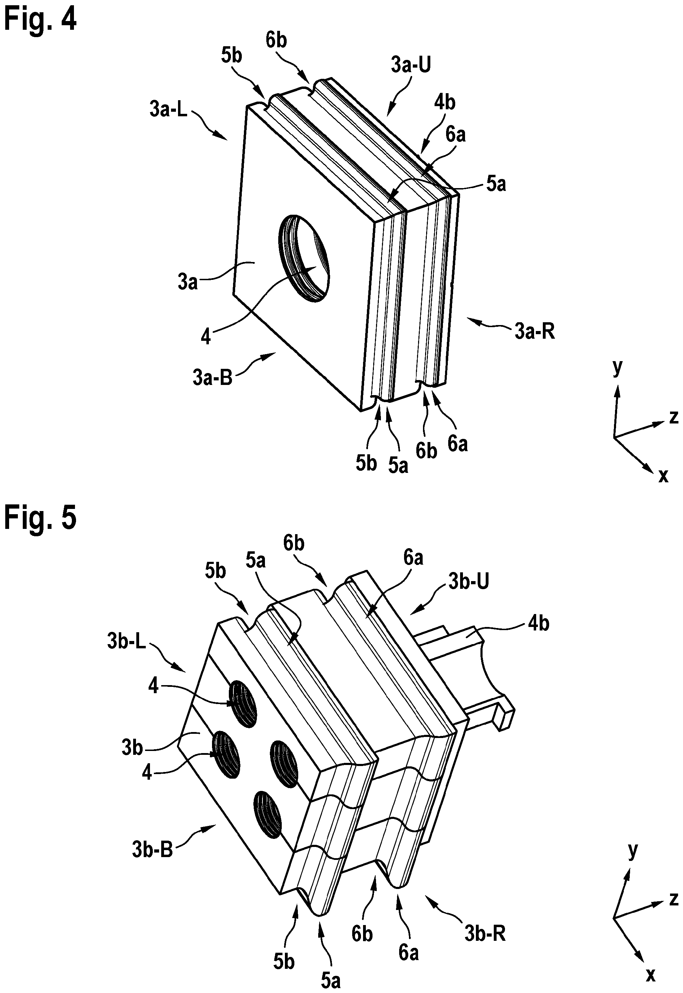

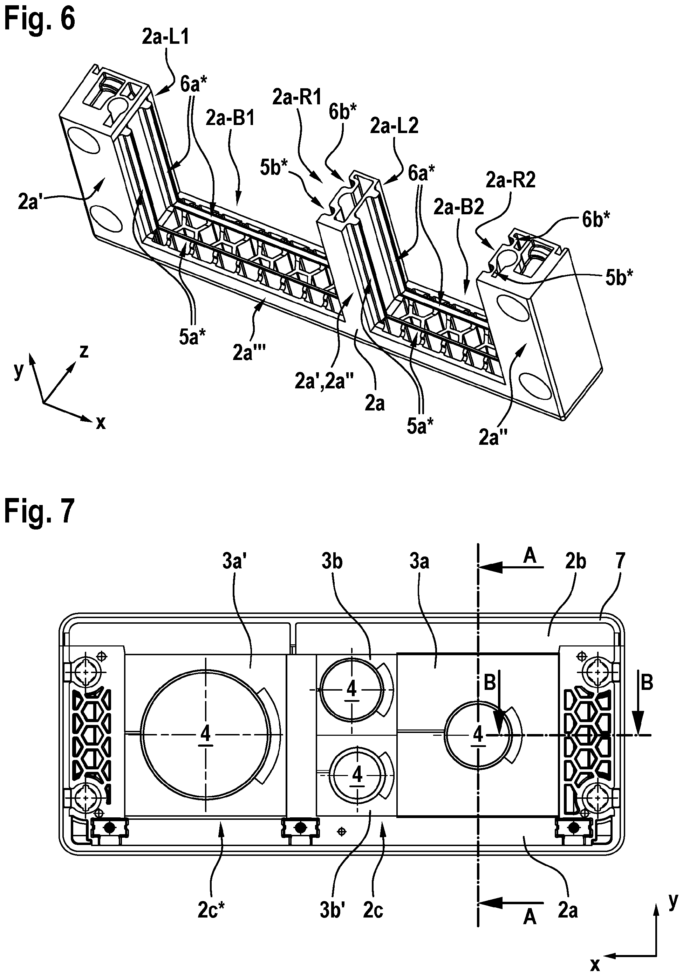

Figure 3 shows the first frame element 2a of Fig. 1 in a removed state, with grommet elements 3a, 3b. First-type tongue-and-groove connection elements 5a, 5a*, 6a, 6a* are running along two neighboring inner sides 2a-L1, 2a-L2, 2a-B1 (Fig. 6), 2a-B2, of the rectangular through-openings 2c, 2c* and along two neighboring outer sides 3a-U, 3a-R (Fig. 5) 3b-U, 3b-R (Fig.4) of the grommet elements 3a, 3b. Second-type tongue-and-groove connection elements 5b, 5b*, 6b, 6b* are running along two other neighboring inner sides 2a-R1, 2a-R2, 2b-U (Fig.2) of the rectangular through-opening 2c, 2c*an along two other neighboring outer sides 3a- L, 3a-B, 3b-L, 3b-B of the grommet elements 3a, 3b (see Figs. 4, 5). The tongue-and-groove connection elements 5a, 5a*, 5b, 5b* of one tongue-and-groove connection 5 are arranged in a different plane (here, parallel to the x-y plane for both tongue-and-groove connections 5, 6) than the tongue-and-groove connection elements 6a, 6a*, 6b, 6b* of the other tongue-and-groove connection 6. Thus, the tongue-and-groove connection 5 may be referred to as outer tongue-and-groove connection, and tongue-and-groove connection 6 as inner tongue-and-groove connection.

As apparent not only from Figs. 2 and 3, but also from Fig. 6, the frame unit 2 may comprise a hexagonal inner structure which extends, with hexagonally-shaped cavities, along the y-direction here. This design provides additional stability for the frame unit 2 and allows to realize the tongue-and-groove connection elements 5a*, 5b*, 6a*, 6b* of the frame unit 2 in a particular slim frame. The improved stability of the frame contributes to the water-/dust-tightening by more stable and thus tighter tongue-and-groove connection elements 5a*, 5b*, 6a*, 6b*.

In Fig. 4, an exemplary embodiment of a grommet element 3a is shown. The grommet element 3a has a quadratic base are here in a projection onto the x-y plane and may thus be referred to as "quadratic" grommet element 3a. The four outer sides that are adjacent to other elements are upper sides 3a-U, right side 3a-R, bottom side 3a-B, and left side 3a-L. The relative indications of orientation are chosen with reference to Fig. 1 in this example, with the positive y-direction indicating upwards.

Similarly, in the exemplary embodiment of a grommet element 3b of Fig. 5, the grommet element 3b also has a quadratic base. The four outer sides that are adjacent to other elements are upper sides 3b-U, right side 3b-R, bottom side 3b-B, and left side 3b-L. The lengths of the respective quadratic base areas are an integer (or, in case of oversized grommet elements 3a, 3b) almost integer multiple of a base measure that is defined based on side lengths of the rectangular through-opening 2c, 2c* (explained in more detail below). Both grommet elements 3a, 3b have a strain relief element 4b in the example provided here.

As a consequence of the explanations provided with respect to Fig. 3, the first-type tongue-and-groove connection elements 5a, 6a are arranged on the respective upper sides 3a-U, 3b-U and right sides 3a-R, 3b-R, which are adjacent or neighboring sides for both grommet elements 3a, 3b shown. Accordingly, the second-type tongue-and-groove connection elements 5b, 6b are arranged on the respective left sides 3a-L, 3b-L and bottom sides 3a-B, 3b-B, which are the other adjacent or neighboring sides for both grommet elements 3a, 3b here. Note that in a direction perpendicular to the main extension plane (i.e. th z-direction here), the grommet elements 3a, 3b are flat between the tongue-and-groove connections 5, 6 - thus, they are designed such that they lie flat against each other (without cavity, thus free space between them). Without free space, a slipping of one of the grommet elements 3a, 3b into such the cavity (as possible in the known state of the art) due to mechanical stress (such as pulling on a cable) is prevented and tightness is maintained during mechanical stress.

Complementing Figs. 4 and 5, Fig. 6 shows an exemplary embodiment of a first frame element 2a of the frame unit 2 of Fig. 1. Therein, the first-type tongue-and-groove connection elements 5a*, 6a* are arranged on the respective bottom sides 2a-B1, 2a-B2 and left sides 2a-L1, 2a-L2, which are adjacent or neighboring sides for the shown frame element 2a. Accordingly, the second-type tongue-and-groove connection elements 5b*, 6b* are arranged on the respective right sides 2a-R1, 2a-R2 and upper sides 2b-U (Fig. 2), which are the other adjacent or neighboring sides here. In particular, in spite of an internal honeycomb structure of the frame unit 2, the first-type tongue-and-groove connection elements 5a*, 6a* on the bottom sides 2a-B1, 2a-B2 and the second-type tongue-and-groove connection elements 5b*, 6b* on the upper side 2b-U form continuous sealing lips. This is also true for the tongue-and-groove connection elements on the remaining sides of the frame unit 2, which are flat and not have said honeycomb-structure. Thus, the proposed interaction geometry of the tongue-and-groove connections is versatile and functional. In the shown example, three protrusions from a base 2a‴ of first frame element 2a form U-legs 2a', 2a" of two U-shapes that delimit the two rectangular through-openings 2c, 2c* of the present embodiment.

The described arrangement of the tongue-and-groove connection elements 5a, 5b, 6a, 6b of the grommet elements 3a, 3b together with the arrangement of the tongue-and-groove connection elements 5a*, 5b*, 6a*, 6b* of the frame unit 2 defines the orientation almost unambiguously, i.e. unambiguously with respect to a rotation of the grommet elements 3a, 3b around the pass-through direction (z-axis here). The front-back orientation is not predefined by the tongue-and-groove connection elements 5a, 5b, 6a, 6b here. However, since the strain relief element 4b is always placed on a back side (oriented towards an inner space of the machine/housing at hand), a faulty assembly with inverse front-back orientation of the grommet elements 3a, 3b is very rare. The front-back orientation could be determined unambiguously with the tongue-and-groove connections 5, 6 by an asymmetric placement of the tongue-and-groove connections 5, 6, i.e. with non-uniform distances of the respective planes in which the tongue-and-groove connections 5, 6 are arranged to the front and back side of the grommet elements 3a, 3b.

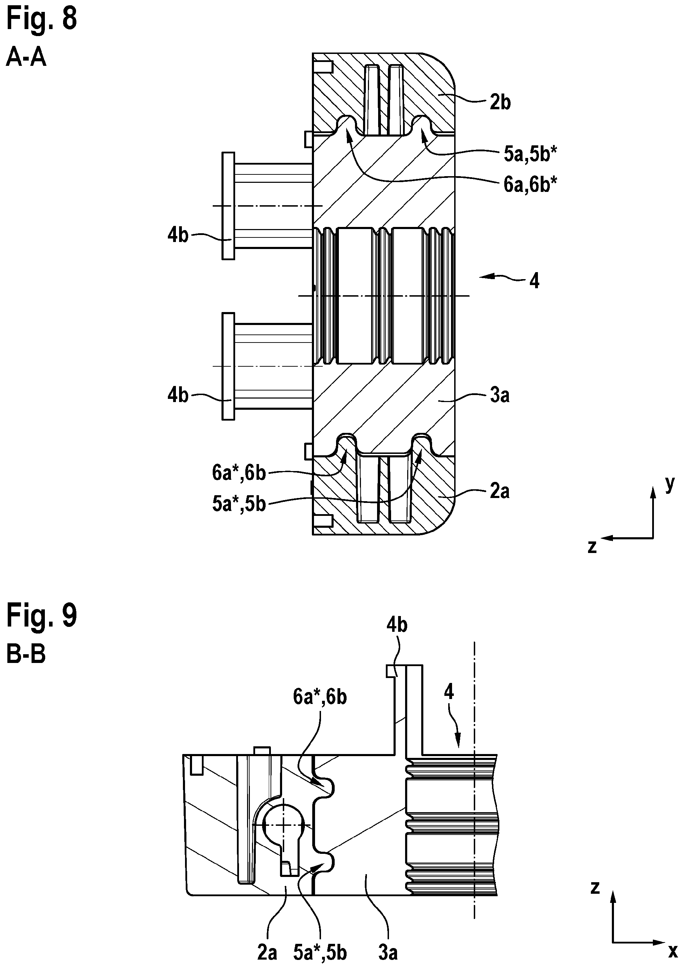

Figure 7 shows a view on the back side of the embodiment of Fig. 1. The frame unit 2 comprises a sealing contour 7 running circumferentially around the rectangular through-openings 2c, 2c* on the back side as an outer side of the frame unit 2 extending along the main extension plane of the frame unit 2. Also, the sections A-A and B-B of Figs. 8 and 9 are indicated.

The embodiment of Fig. 7 is shown in a cross-section A-A in Fig. 8. The first-type tongue-and-groove connection elements 5a*, 6a* of the frame element 2a engage with the second-type tongue-and-groove connection elements 5b, 6b of the shown grommet element 3a, and the second-type tongue-and-groove connection elements 5b*, 6b* of the frame element 2b engage with the first-type tongue-and-groove connection elements 5a, 6a of the shown grommet element 3a.

The embodiment of Fig. 7 is shown in a cross-section B-B in Fig. 9. The first-type tongue-and-groove connection elements 5a*, 6a* of the frame element 2a engage with the second-type tongue-and-groove connection elements 5b, 6b of the shown grommet element 3a.

This setup, where each grommet element 3a, 3a', 3b, 3b' is held in place by the two tongue-and-groove connections 5, 6 from all sides (be it directly by the frame unit 2 or via another one of the grommet elements 3a, 3a', 3b, 3b') results in a firm and water-/dust-tight fixation of the respective grommet element 3a, 3a', 3b, 3b' also in adverse situations. Thus, a cable fairlead system with improved reliability is realized by the shown approach.

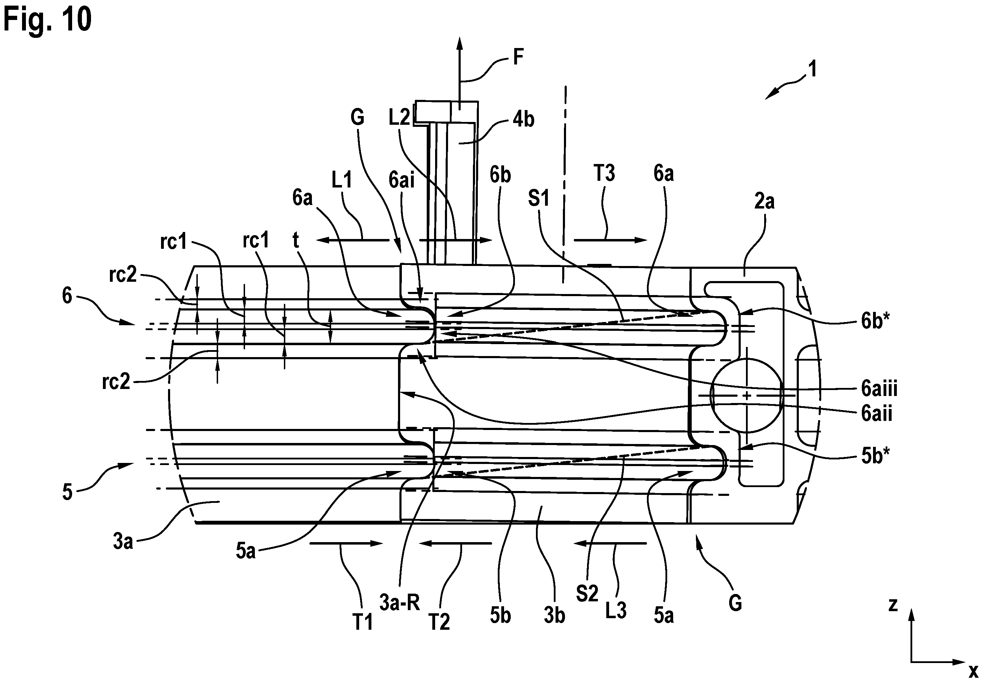

Figure 10 illustrates a stress situation where a pulling/pushing force F is excerted on one or several grommet elements 3a, 3b perpendicular to the main extension plane of the cable fairlead system 1 (here towards an inner space of the housing to be sealed during intended use). The present example shows a slight relative displacement of grommet element 3b in positive z-direction (towards the inner space), e.g. due to force F as a pull force on the strain relief element 4b. In known approaches, already a relatively small force F is sufficient for a relative large displacement of grommet element 3b relative to its neighboring grommet element 3a. Without the exemplary interaction geometry shown here, in particular when there is an empty space, a cavity between the grommet elements 3a, 3b (such as a space where temporarily added assembly aids have been removed from, or a space resulting from less advantageous interaction geometries of the known state of the art), the respective grommet element would slide into that empty space, with the loss of tightness and physical integrity of the cable fairlead system. Note that the (elastic) grommet elements may be oversized, and thus be pressed into their position in the frame unit 2 under deformation.

The proposed interaction geometry with two tongue-and-groove connections 5, 6 (inner and outer tongue-and-groove connection) results in a completely different behavior of the system 1 under stress.

The tongue-and-groove connection elements 5a, 5b, 5b*, 6a, 6b, 6b* are rounded connection elements in the shown example. Here, the different tongue-and-groove connection elements 5a, 5b, 5b*, 6a, 6b, 6b* have an identically shaped cross-section, which is explained in more detail with reference to first-type, tongue-type, tongue-and-groove connection elements 6a.

There, the side walls 6ai, 6aii of the connection elements merge into the top wall 6aiii of the tongue-type tongue-and-groove connection element 6a, which top wall 6aiii corresponds to a bottom wall for groove-type tongue-and-groove connection element 6b, at least essentially with a radius of curvature rc1 of in this case at least 45% of a thickness t of the respective connection element 6a. Said thickness t is be measured in the pass-through direction here, between two at least essentially parallel parts of the respective side walls 6ai, 6aii.

Correspondingly, the side walls 6ai, 6aii merge into the outer side 3a-R of the grommet element 3a rounded, i.e. at least essentially following a further radius of curvature rc2. Preferably, said further radius of curvature rc2 is smaller than the radius of curvature rc1. The further radius of curvature rc2 is at least 15% of the thickness t of the connection element 6a and at most 30% of the thickness there.

Firstly, force dissipation is improved by the interaction geometry: The improved engagement of the grommet element 3b with its neighboring grommet element 3a results in a better transmission of force F into neighboring frame/grommet element 2a/3a (and even further into other grommet elements not shown). The result is a smaller displacement of the grommet element 3b relative to its neighboring grommet element 3a and other neighboring elements, as well the transmission of a larger part of force F into frame unit 2 (which is more stable than the grommet elements 3a, 3b and fixed to the housing in intended use). Thus, force dissipation is improved.

Secondly, dust-/water-tightness is actively improved by the force F: In this example, the pushing/pulling force F at grommet element 3b in the positive z-direction results in loosening forces L1, L2 that pull the two neighboring grommet elements 3a, 3b apart at the positive-z-side of the system 1, and a loosening force L3 that pulls grommet element 3a away from the housing element 2a at the negative-z-side of the system 1. The loosening forces L1, L2, L3 give rise to gaps G that locally degrade tightness of the system. However, at the same time the pushing/pulling force F at grommet element 3b in the positive z-direction results in tightening forces T1, T2 that push the two neighboring grommet elements 3a, 3b together at the negative-z-side of the system 1, and a tightening force T3 that pushes grommet element 3a towards the housing element 2a at the positive -z-side of the system 1. A local improvement of the tightness is the consequence there. Since the grade of dust-/water-tightness is defined by the tightest part, dust-/water-tightness of the cable fairlead system 1 is actually improved under stress. So, for example in situations where the force F is caused by a jet of water, the exposure to the water actually increases water-tightness.

Furthermore, due to the rounded connection elements, a sealing line S1, S2 which ensures dust-/water-tightness is defined between the different grommet and frame elements, respectively, in a concise way. Consequently, dust-/water-tightness is maintained also when the direction of the force F is varied, which happens in many practical applications.

## Claims

1. Cable fairlead system (1) for passing at least one cable in a pass-through direction transverse to a main extension plane of the Cable fairlead system (1), comprising:
- a frame unit (2) with a first frame element (2a) and a second frame element (2b), the frame elements (2a, 2b) being made with a hard component;
- a number of grommet elements (3a, 3a', 3b, 3b') being made with a soft component, the soft component of the grommet elements (3a, 3a', 3b, 3b') being soft as compared to the hard component of the frame elements (2a, 2b), where at least one of the grommet elements (3a, 3a', 3b, 3b') has at least one cable-feedthrough (4) for passing one respective cable of the at least one cable; where
- the first frame element (2a) and second frame element (2b) delimit at least one through-opening (2c, 2c*) in which the grommet elements (3a, 3a', 3b, 3b') are arranged by means of a form-fit connection;
**characterized by**
- first-type tongue-and-groove connection elements (5a, 5a*, 6a, 6a*) extending along two neighboring inner sides (2a-L1, 2a-L2, 2a-B1, 2a-B2) of the through-opening (2c, 2c*) and along two neighboring outer sides (3a-U, 3a-R) of the grommet elements (3a, 3a', 3b, 3b'); and
- second-type tongue-and-groove connection elements (5b, 5b*, 6b, 6b*) extending along two other neighboring inner sides (2a-R1, 2a-R2, 2b-U) of the through-opening (2c, 2c*) an along two other neighboring outer sides (3a-L, 3a-B) of the grommet elements (3a, 3a', 3b, 3b'); where
- first-type and second-type tongue-and-groove connection elements (5a, 5a*, 5b, 5b*, 6a, 6a*, 6b, 6b*) are fit to one another to form the form-fit connection (5, 6) with respect to the pass-through direction; and
- on the inner sides of the through-opening (2c, 2c*) and on the outer sides of the grommet elements (3a, 3a', 3b, 3b') two tongue-and-groove connection elements (5a, 5a*, 5b, 5b*, 6a, 6a*, 6b, 6b*) are arranged in two different planes extending along the main extension plane.

2. Cable fairlead system (1) according to claim 1,
**characterized in that**
- the first-type tongue-and-groove connection elements (5a, 5a*, 6a, 6a*) are tongue-type tongue-and-groove connection elements and the second-type tongue-and-groove connection elements (5b, 5b*, 6b, 6b*) are groove-type tongue-and-groove connection elements; and
- three (2a-L1, 2a-L2, 2a-B1, 2a-B2, 2a-R1, 2a-R2) of four inner sides of the respective through-openings (2c, 2c*), preferably rectangular through-openings (2c, 2c*), are at least mainly formed by the first frame element (2a), and one (2b-U) of the four inner sides of the through-opening (2c, 2c*) is formed at least mainly by the second frame element (2b); where
- the bottom inner side (2a-B1, 2a-B2) which is at least mainly formed by the first frame element (2a) opposite to the upper inner side (2b-U) which is at least mainly formed by the second frame element (2b) has a first-type tongue-and-groove connection element.

3. Cable fairlead system (1) according to any one of the preceding claims, **characterized in that**
the two tongue-and-groove connection elements on the inner sides of the through-opening (2c, 2c*) and on the outer sides of the grommet elements (3a, 3a', 3b, 3b') are tongue-and-groove connection elements of the same type.

4. Cable fairlead system (1) according to any one of the preceding claims, **characterized in that**
the tongue-and-groove connection elements are continuous connection elements extending along the respective sides continuously.

5. Cable fairlead system (1) according to any one of the preceding claims, **characterized in that**
the tongue-and-groove connection elements of one type transition seamlessly into the tongue-and-groove connection elements of the other type at edges between the different sides.

6. Cable fairlead system (1) according to any one of the preceding claims, **characterized in that**
the tongue-and-groove connection elements are undercut-free connection elements.

7. Cable fairlead system (1) according to any one of the preceding claims, **characterized in that**
the grommet elements (3a, 3a', 3b, 3b') are oversized such that they are deformed when the through-opening (2c, 2c*) is filled with them.

8. Cable fairlead system (1) according to any one of the preceding claims, **characterized in that**
the tongue-and-groove connection elements (5a, 5a*, 6a, 6a*, 5b, 5b*, 6b, 6b*) are rounded tongue-and-groove connection elements, in particular with a radius of curvature (rc1) of at least 25%, preferably at least 33%, more preferably at least 45%, of a thickness (t) of the respective tongue-and-groove connection element (5a, 5a*, 6a, 6a*, 5b, 5b*, 6b, 6b*).

9. Cable fairlead system (1) according to any one of the preceding claims, **characterized in that**
- side lengths of the through-opening (2c, 2c*) are an integer multiple of a base measure; and
- the grommet elements (3a, 3a', 3b, 3b') have, in an orthogonal projection onto the main extension plane a quadratic base area, with a side length of the quadratic base area being an integer multiple of the base measure.

10. Cable fairlead system (1) according to any one of the preceding claims, **characterized in that**
at least two grommet elements (3a, 3a', 3b, 3b') are adjacent to at least two other grommet elements (3a, 3a', 3b, 3b'), in particular adjacent to three other grommet elements (3a, 3a', 3b, 3b').

11. Cable fairlead system (1) according to any one of the preceding claims, **characterized in that**
the frame unit (2) comprises a sealing contour (7) running circumferentially around the through-opening (2c, 2c*) on an outer side of the frame unit (2) extending along the main extension plane of the frame unit (2).

12. Cable fairlead system (1) according to any one of the preceding claims, **characterized in that**
at least one of the grommet elements (3a, 3a', 3b, 3b') comprises a strain relief element (4b) on an outer side of the grommet element running along the main extension plane of the frame unit (2), where in particular the outer side of the grommet element is orientated as the outer side of the frame unit (2) comprising the sealing contour (7).

13. One or more grommet elements (3a, 3a', 3b, 3b') for a cable fairlead system (1) according to any one of the preceding claims, with at least one cable-feedthrough (4) for passing one respective cable;
**characterized in that**
- first-type tongue-and-groove connection elements (5a, 5a*, 6a, 6a*) extend along two neighboring outer sides of the one or more grommet elements (3a, 3a', 3b, 3b'); and
- second-type tongue-and-groove connection elements (5b, 5b*, 6b, 6b*) extend along two other neighboring outer sides of the one or more grommet elements (3a, 3a', 3b, 3b'); where
- first-type and second-type tongue-and-groove connection elements (5b, 5b*, 6b, 6b*) are fit to one another to form the form-fit connection with respect to the pass-through direction; and
- on the outer sides of the grommet elements (3a, 3a', 3b, 3b') two tongue-and-groove connection elements are arranged in two different planes extending along the main extension plane.

14. Set of grommet elements (3a, 3a', 3b, 3b') according to the preceding claim, with different types of grommet elements (3a, 3a', 3b, 3b'), which differ in the respective number of cable-feedthroughs (4) and/or in the respective size; in particular with grommet elements (3a, 3a', 3b, 3b') of a smaller type having outer-side length which is half of an outer-side length of grommet elements (3a, 3a', 3b, 3b') of a bigger type.

15. Frame unit (2) or first frame element (2a) or second frame element (2b) or a cable fairlead system (1) according to any one of claims 1-11, configured for delimiting at least one through-opening (2c, 2c*) for one or more grommet elements (3a, 3a', 3b, 3b');
**characterized in that**
- first-type tongue-and-groove connection elements (5a, 5a*, 6a, 6a*) extend along two neighboring inner sides of the through-opening (2c, 2c*); and
- second-type tongue-and-groove connection elements (5b, 5b*, 6b, 6b*) extend along two other neighboring inner sides of the through-opening (2c, 2c*); where
- first-type and second-type tongue-and-groove connection elements (5b, 5b*, 6b, 6b*) are fit to one another to form the form-fit connection with respect to the pass-through direction; and
- on the inner sides of the through-opening (2c, 2c*) two tongue-and-groove connection elements are arranged in two different planes.
